# EUROPEAN PATENT SPECIFICATION

(11) **EP 0 700 813 B1**
(45) Date of publication and mention of the grant of the patent: **24.03.1999**
(21) Application number: 95304281.9
(22) Date of filing: 20.06.1995
(51) Int. Cl.: B60S 1/32

(54) **Structure for mounting an aerodynamic deflector on a windscreen wiper**
Vorrichtung zur Montage eines aerodynamischen Windabweiser auf einen Scheibenwischer
Dispositif de montage d'un déflecteur aérodynamique sur un balai d'essuie-glace

(30) Priority: 06.09.1994 JP 238404/94
(43) Date of publication of application: 13.03.1996
(73) Proprietor: Mitsuba Corporation, Kiryu-shi, Gunma-ken (JP)
(72) Inventor: Hoshino, Takashi, Isesaki-shi, Gunma-ken (JP)
(74) Representative: Smith, Norman Ian

(56) References cited:
- EP-A- 0 368 090
- EP-A- 0 369 672
- DE-A- 3 218 847
- DE-A- 3 517 575
- FR-A- 2 556 297

## Description

### BACKGROUND OF THE INVENTION

### Field of the Invention

The present invention relates to a structure for mounting a wind receiving member in a wiper device mounted to wipe a wind-shield of vehicles such as buses, tracks, passenger cars and the like.

### Description of the Related Art

Conventional wiper devices generally have a drawback that when a vehicle travels at a high speed, a lift is produced in a wiper blade by an air stream blown against a windshield and the wiping capacity of the wiper blade is lowered by a floating-up phenomenon of the blade caused by the lift. To overcome this drawback, a wind receiving member has been conventionally disposed at the extreme end of a wiper arm with which the wiper blade is provided to thereby press the wiper blade against the windshield by a wind pressure received by the wind receiving member.

However, although it is preferable to mount the wind receiving member at a position as near to the extreme end of the wiper arm as possible to suppress the floating-up phenomenon, a conventional wiper arm only extends to a position where the wiper blade is mounted thereto. To cope with this problem, some wiper devices have an arrangement in which the base end side of a wind receiving member is mounted to the extreme end of a wiper arm. The wind receiving member projects in the direction in which the wiper arm extends as shown in Japanese Utility Model Publication No. 63-32536 (JP-Y2-32 536/88). In this arrangement, the wiper blade has an increased force for pressing against a windshield because the wind receiving member is disposed at the extreme end of the wiper arm. However, since the wind receiving member is cantilevered at the base end side thereof, when a wind pressure is increased as a vehicle travels at high speed, vibration is produced in the wind receiving member. The vibration causes problems in that not only is the life of the wind receiving member shortened, but also quietness in a compartment is disrupted by a chattering noise made by the vibration. Thus, the wind receiving member arranged as described above cannot achieve the desired effect. To achieve the desired effect, an increase of the width and strength of the wind receiving member and the like must be additionally considered.

On the other hand, other wiper devices have an arrangement in which a support arm for a wind receiving member is projected from a wiper arm and the wind receiving member is mounted to the support arm as shown in Japanese Utility Model Publication Laid-Open No. 3-59263 (JP-U-59263/91). In this arrangement, however, there arises a new problem that since the dedicated support arm is additionally needed, the number of parts is increased as well as assembly is made complex.

Further, since a pantograph type viper arm needs a sub-wiper arm for rotating a wiper blade in addition to a main wiper arm, an area cast on a windshield is increased. Therefore, when a wind receiving member is mounted to this type of wiper arm, a position where the wiper arm is mounted on the vehicle must be offset upward taking the interference between the wind receiving member and the frame of the wind shield into consideration. Thus a problem arises in that when the wiper arm is not in operation, a field of view through a wind-shield is obstructed and further the size of the wiper arm is increased.

### SUMMARY OF THE INVENTION

Taking the above situation into consideration, an object of the present invention is to provide a structure for mounting a wind receiving member on a wiper device capable of solving the above problems.

According to the present invention, there is provided

A structure for mounting a wind receiving member in a wiper device comprising a wiper arm which is arranged to be reciprocatingly swung about a pivot position (2) and has a wiper blade mounted at a wiper blade mounting portion, said wiper arm having a base end portion disposed between the wiper blade mounting portion and the wiper arm pivot position characterised in that,
said wiper arm has an extending section extending from the wiper blade mounting portion so as to project in the distal direction, and
said wind receiving member is supported by the extending section on one side of the wiper blade mounting portion and by the base end portion on the opposite side of the wiper blade mounting portion.

Preferably the portion of the wiper arm confronting the wind receiving member thereof is curved to dislocate to the side opposite to that where the wind receiving member is disposed.

With the above arrangements, the present invention can mount the wind receiving member to a position as near to the extreme end side as possible without the use of a dedicated support arm which would be otherwise separately required.

### BRIEF DESCRIPTION OF THE DRAWINGS

FIG. 1 is a plan view of a wiper device;

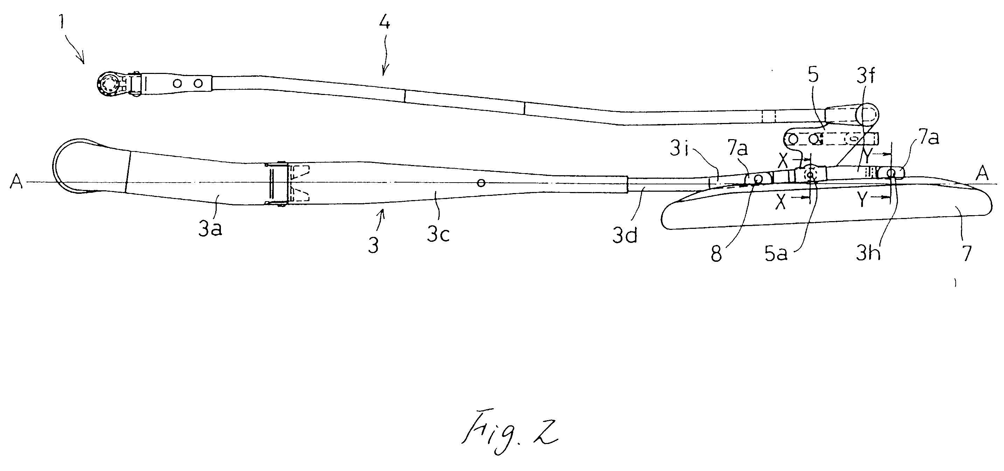

FIG. 2 is a plan view of a wiper arm;

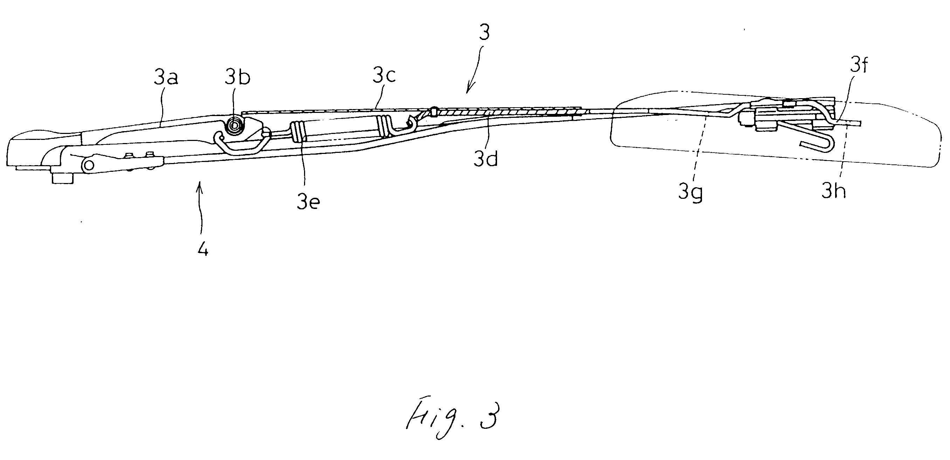

FIG. 3 is a front elevational view of the wiper arm;

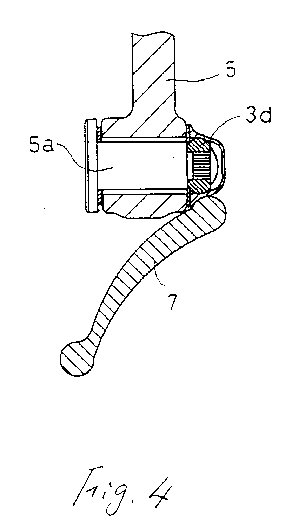

FIG. 4 is a cross-sectional view taken along the line X - X of FIG. 2;

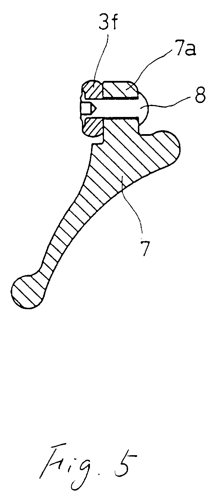

FIG. 5 is a cross-sectional view taken along the line Y - Y of FIG. 2; and
FIG. 6 is a plan view of a wiper arm showing a second embodiment.

### DESCRIPTION OF PREFERRED EMBODIMENTS

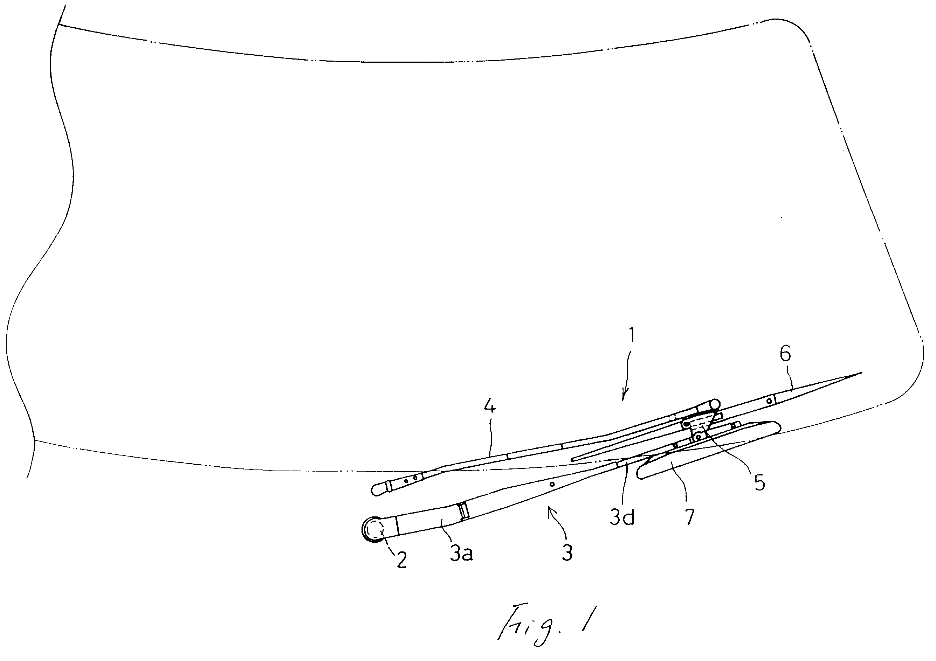

Next, an embodiment of the present invention will be described with reference to the drawings. In FIG. 1, numeral 1 denotes a pantograph type wiper device which is composed of a main arm 3 (corresponding to a wiper arm of the present invention) integrally connected to a pivot shaft 2 which is reciprocatingly swung by the operation of a wiper drive unit (not shown) rotatably supported by a body and a sub-arm 4 disposed in parallel with the main arm 3. Although the opposite sides of a connector member 5 are swingably connected to the respective extreme ends of the main arm 3 and the sub-arm 4 through a swing shaft 5a and a wiper blade 6 is connected to the connector member 5, this arrangement is the same as that of a conventional wire arm.

The main arm 3 is composed of respective members such as an arm head 3a integrally connected to the pivot shaft 2, an arm shank 3c swingably connected to the arm head 3a through a support shaft 3b, an arm piece 3d having a base end integrally connected to the arm shank 3c and an extreme end connected to the connector member 5, a spring 3e interposed between the arm head 3a and the arm piece 3d to urge the extreme end of the arm piece 3d toward a wind shield side. Formed to the extreme end of the arm piece 3d is an extending section 3f extended to project to the extreme end side beyond the support portion where the above connector member 5 is rotatably supported and mounting holes 3g, 3h for supporting a wind receiving member 7 to be described below are defined to the extending section 3f at its extreme end side and its base end side across the support portion where the connector member 5 is rotatably supported.

Note, the base end portion of the arm piece 3d and the extreme end portion of the extending section 3f are formed to have substantially the same surface and curved so that the portions where the mounting holes 3g, 3h are defined are located above the aforesaid surface and further a curved portion 3i is formed to the arm piece 3d so that the portion of the arm piece 3d confronting the wind receiving member 7 is slightly curved toward the side opposite to that where the wind receiving member 7 is provided.

The wind receiving member 7 is formed to a ship bottom shape with an approximately arc-shaped cross-section and a wind pressure is received by the inner surface of the bottom. Further, the wind receiving member 7 is fixed to the arm piece 3d in such a manner that it is integrally locked to a pair of mounting pieces 7a projecting from the outer surface of the bottom outward by rivets 8 inserted into the both mounting holes 3g, 3h in order to prevent the wind receiving member 7 from falling off.

In the embodiment of the present invention arranged as described above, when a vehicle travels at a high speed, the wiper blade 6 of the pantograph type wiper device 1 tends to float up by receiving a lift produced by a convection current blown against the wind-shield. At the time, however, the wiper device 1 receives a force in a direction for causing the wiper device 1 to be pressed against the wind-shield side against the lift by the wind receiving member 7 disposed to the arm piece 3d of the main arm 3, whereby the reduction of wind shield wiping capacity of the wiper blade 6 can be prevented. In this case, since the wind receiving member 7 is mounted to the opposite sides of the arm piece 3d across the support portion of the connector member 5, a long distance can be secured from the portion for rotatably supporting the body of the main arm 3 serving as the pivot shaft 2 portion to the wind receiving member 7, that is from the pivot shaft 2 to the wind receiving member 7. With this arrangement, the pressing force of the main arm 3 can be increased by the wind receiving member which receives a wind pressure and thus the floating up of the wiper blade 6 can be effectively prevented.

Since the surface formed by the base end portion of the arm piece 3d and the extreme end portion of the extending section 3f is located below the position where the wind receiving member 7 of the arm piece 3d is mounted, the height of the main arm 3 itself is suppressed to a low level as well as the pressing force of the wind receiving member 7 can be increased.

In the wiper device in which the present invention is embodied, since the wind receiving member 7 is supported by the extending section 3f formed to the arm piece 3d constituting the main arm 3, a support arm dedicated for the wind receiving member, which would be required by a conventional wiper device need not be separately provided regardless of that the wind receiving member 7 is mounted as near to the extreme end of the main arm 3 as possible so as to sufficiently exhibit a floating-up preventing function. As a result, the number of parts can be reduced because the wind receiving member 7 can be directly mounted to the main arm 3 and further the structure of the wiper device 1 can be simplified.

Further, since the arm piece 3d is offset in the curved portion 3i to the side opposite to that where the wind receiving member 7 is disposed, the wind receiving member 7 can overlap the axial center A of the main arm 3. Thus, when the wiper device 1 is at a stop position, the main arm 3 can be located at a lower position without causing the wind receiving member 7 to be abutted against the frame of the windshield so that a large filed of view can be secured.

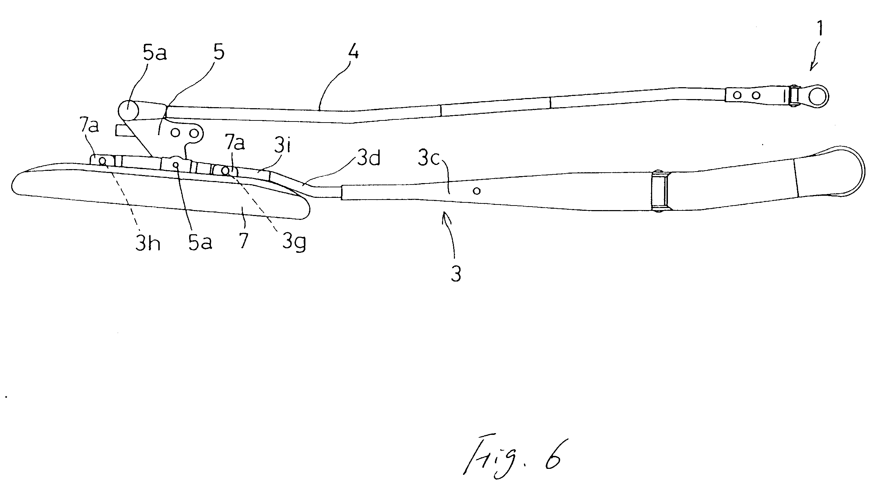

Note, the present invention is not of course limited to the above embodiment but the main arm to which the wind receiving member is mounted may be arranged such that the curved portion 3i confronting the wind receiving member 7 of the main arm 3 is offset to the sub-arm 4 side as shown in a second embodiment of FIG. 6. With this arrangement, when the wind receiving member 7 is caused to overlap with a line extending from the main arm 3 as much as possible and the wiper device is arranged as the pantograph type, the width of the wiper device in the swinging direction thereof for wiping operation can be further reduced, whereby the size of the wiper device can be reduced when it is stowed away.

Further, the wind receiving member need not be mounted to the main arm by the rivets as in the above embodiment but may be fastened by bolts and nuts or screws, and when the wind receiving member is mounted in such a manner, it can be dismounted and thus a maintenance job can be more easily carried out in the replacement of the wind receiving member and the like.

Briefly speaking, since the present invention is arranged as described above, the wind receiving member for preventing the floating-up of the wiper blade caused when a vehicle travels at a high speed is mounted on the opposite sides across the portion where the wiper blade is mounted so that the wind receiving member can be located as near to the extreme end of the wiper arm as possible. As a result, the wind receiving member more effectively prevents floating-up of wiper blade.

Moreover, since the wind receiving member is mounted to the extreme end side of the wiper arm by the use of the extending section projecting to the extreme end side beyond the portion where the wiper blade of the wiper arm is mounted, it is not necessary to mount the wind receiving member by a dedicated support arm which would be otherwise separately required. Therefore, the number of parts is not increased and the structure of the wiper arm can be more simplified and compact.

## Claims

1. A structure for mounting a wind receiving member (7) in a wiper device (1) comprising a wiper arm (3) which is arranged to be reciprocatingly swung about a pivot position (2) and has a wiper blade mounted at a wiper blade mounting portion (5a), said wiper arm having a base end portion (3d) disposed between the wiper blade mounting portion and the wiper arm pivot position (2) characterised in that,
said wiper arm (3) has an extending section (3f) extending from the wiper blade mounting portion (5a) so as to project in the distal direction, and
said wind receiving member (7) is supported by the extending section (3f) on one side of the wiper blade mounting portion (5a) and by the base end portion (3d) on the opposite side of the wiper blade mounting portion (5a).

2. A structure for mounting a wind receiving member in a wiper device according to claim 1 in which the wind receiving member (7) is disposed on one side of the wiper arm (3) and the wiper arm (3) is curved so that a portion of the wiper arm (3) in the region of the wind receiving member (7) is offset to the side opposite to that where the wind receiving member is disposed.

3. A structure for mounting a wind receiving member (7) according to claim 1 or claim 2 further comprising:
a sub-arm (4); and
a connector member (5) having a sub-arm side opposite a wiper arm side, the wiper arm side of the connector member rotatably mounted to the wiper arm (3) at the wiper blade mounting portion (5a) and the sub-arm side of the connector member (5) rotatably mounted to the sub-arm (4); wherein the wiper blade is mounted to the connector member.

## Patentansprüche

1. Baugruppe zur Aufnahme eines Windauffanggliedes (7) in einer Scheibenwischvorrichtung (1) mit einem Wischarm (3) in einer Anordnung, die hin- und hergehende Schwingbewegungen um eine Schwingungslagerung (2) zuläßt, und die ein Wischblatt aufweist, das auf einem Wischblattlagerteil (5a) gelagert ist, wobei der Wischarm einen Grundkörper (3d) in der Anordnung zwischen dem Wischblattlagerteil (5a) und der Schwingungslagerung (2) aufweist,
**dadurch gekennzeichnet,**
daß der Wischarm (3) einen Verlängerungsabschnitt (3f) aufweist, der sich vom Wischblattlagerteil (5a) aus in der Verlängerungsrichtung des Wischarmes erstreckt und
daß das Windauffangglied (7) von dem Verlängerungsabschnitt (3f) auf einer Seite des Wischblattlagerteils (5a) und von dem Grundkörper (3d auf der anderen Seite des Wischblatlagerteiles (5a) gehalten ist.

2. Baugruppe zur Aufnahme eines Windauffanggliedes in einer Scheibenwischvorrichtung nach Anspruch 1, bei der das Windauffangglied (7) auf einer Seite des Wischarmes (3) angeordnet ist und der Wischarm (3) im Bereich des Windauffanggliedes (7) nach der Gegenseite zum Windauffangglied hin gekröpft ist.

3. Baugruppe zur Aufnahme eines Windauffanggliedes in einer Scheibenwischvorrichtung nach Anspruch 1 oder Anspruch 2, die ferner einschließt:
einen Teilarm (4) und
ein Verbindungsglied (5) mit einer Teilarmseite gegenüber einer Wischarmseite, wobei die Wischarmseite des Verbindungsgliedes drehbar am Wischarm (3) im Bereich des Wischblattlagerteils (5a) gelagert ist und die Teilarmseite des Verbindungsgliedes (5) drehbar am Teilarm (4) gelagert ist, wobei das Wischblatt am Verbindungsglied gelagert ist.

## Revendications

1. Une structure de montage d'un déflecteur (7) sur un dispositif essuieglace (1) comprenant un balai d'essuie-glace (3) qui est prévu pour osciller en va-et-vient autour d'une position de pivotement (2) et présente une lame d'essuie-glace montée au niveau d'une portion de montage (5a) de la lame d'essuie-glace, ledit balai d'essuie-glace présentant une portion d'extrémité de base (3d) disposée entre la portion de montage de la lame d'essuie-glace et la position de pivotement (2) du balai d'essuie-glace, caractérisée en ce que :
ledit balai d'essuie-glace (3) présente une section de prolongement (3f) s'étendant depuis la portion de montage (5a) de la lame d'essuie-glace de manière à faire saille dans la direction distale, et
ledit déflecteur (7) est supporté par la section de prolongement (3f) d'un côté de la portion de montage (5a) de la lame d'essuie-glace et par la portion d'extrémité de base (3d) sur le côté opposé de la portion de montage (5a) de la lame d'essuie-glace.

2. Une structure de montage d'un déflecteur dans un dispositif essuie-glace selon la revendication 1, dans lequel le déflecteur (7) est disposé d'un côté du balai d'essuie-glace (3) et en ce que le balai d'essuie-glace (3) est incurvé de sorte qu'une portion du balai d'essuie-glace (3) dans la région du déflecteur (7) est décalée vers le côté opposé à celui où est disposé le déflecteur.

3. Une structure de montage d'un déflecteur (7) selon la revendication 1 ou la revendication 2 comprenant en outre :
un bras secondaire (4); et
un élément de liaison (5) présentant un côté de bras secondaire opposé à un côté de balai d'essuie-glace, le côté de balai d'essuie-glace de l'élément de liaison étant monté de manière rotative sur le balai d'essuie-glace (3) au niveau de la portion de montage (5a) de la lame d'essuie-glace et le côté du bras secondaire de l'élément de liaison (5) étant monté de manière rotative sur le bras secondaire (4); la lame d'essuie-glace étant montée sur l'élément de liaison.
